# EUROPEAN PATENT SPECIFICATION

(11) **EP 2 677 811 B1**
(45) Date of publication and mention of the grant of the patent: **31.01.2018**
(21) Application number: 13184536.4
(22) Date of filing: 03.12.2010
(51) Int. Cl.: H04W 36/08, H04W 48/02, H04W 84/10, H04W 84/04, H04W 92/12

(54) **Selection between X2 and S1 handover based on Closed Subscriber Group ID**
Auswahl zwischen X2 und S1 handover in Abhängigkeit der Closed Subscriber ID
Sélection entre X2 et S1 transfer intercellulaire basé sur Closed Subscriber ID

(30) Priority: 04.12.2009 JP 2009276881
(43) Date of publication of application: 25.12.2013
(62) Divisional of application: 10834663.6
(73) Proprietor: NTT DOCOMO, INC., Chiyoda-ku Tokyo 100-6150 (JP)
(72) Inventor: Takahashi, Hideaki, Tokyo, 100-6150 (JP); Hapsari, Wuri Andarmawanti, Tokyo, 100-6150 (JP); Okamoto, Takeshi, Tokyo, 100-6150 (JP); Iwamura, Mikio, Tokyo, 100-6150 (JP); Ishii, Minami, Tokyo, 100-6150 (JP)
(74) Representative: Hoffmann Eitle

(56) References cited:
- EP-A1- 2 490 481
- QUALCOMM EUROPE: "Access control for in-bound mobility to HeNBs", 3GPP DRAFT; S2-090129, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20090107, 7 January 2009 (2009-01-07), XP050332721,
- "3rd Generation Partnership Project; Technical Specification Group Services and System Aspects; General Packet Radio Service (GPRS) enhancements for Evolved Universal Terrestrial Radio Access Network (E-UTRAN) access (Release 9)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 1 September 2009 (2009-09-01), pages 1-245, XP050363633,
- "3rd Generation Partnership Project; Technical Specification Group Services and System Aspects; Architecture aspects of Home NodeB and Home eNodeB (Release 9)", 3GPP STANDARD; 3GPP TR 23.830, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.6.0, 1 September 2009 (2009-09-01), pages 1-54, XP050363908,

## Description

### TECHNICAL FIELD

The present invention relates to a mobile communication method and to a mobile switching center.

### BACKGROUND ART

In a mobile communication system employing an LTE (Long Term Evolution) scheme, the configuration is such that a mobile switching center MME (Mobility Management Entity) performs access control for a mobile station UE to a handover destination cell in a handover procedure. According to 3GPP TS 23.401 V9.2.0, a distinction can be made between a X2 handover and a S1 handover.

### SUMMARY OF THE INVENTION

### PROBLEMS TO BE SOLVED BY THE INVENTION

However, in a case where, in such a mobile communication system, the "CSG (Closed Subscriber Group) ID" of the handover destination cell and the "CSG ID" of the handover source cell are different, access control by the above-described mobile switching center MME is needed, and therefore an S1 handover must be performed, rather than an X2 handover.

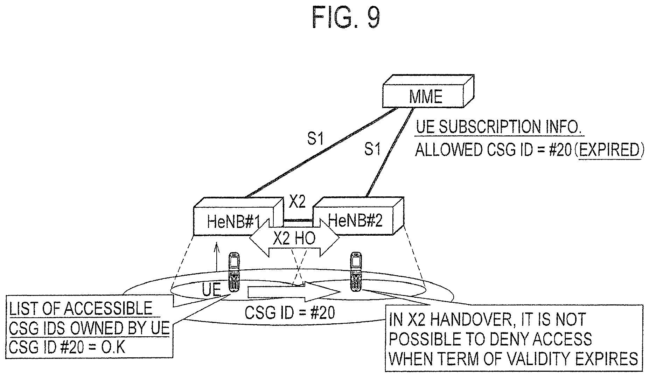

Moreover, even in a case where the "CSG ID" of the handover destination cell and the "CSG ID" of the handover source cell are identical, as illustrated in FIG. 9, then in a case where information involved in the term of validity of the "CSG ID" of the cells that the mobile station UE is able to access is not promptly synchronized and is not consistent between the mobile station UE and a network, then access control by the above-described mobile switching center MME is still needed, and therefore the S1 handover must be performed, rather than the X2 handover.

For example, after the expiration of the term during which the the mobile station UE is able to access a cell of "CSG ID = #20", the network deletes information involving the "CSG ID = #20", whereas in a case where the mobile station UE does not delete the information involving the "CSG ID = #20", then the state between the mobile station UE and the network becomes such that the information involving the "CSG IDs" of the cells that the mobile station UE is able to access is not consistent.

In such a case, when the X2 handover is performed, it is not possible to deny the access by the mobile station UE to the cell "CSG ID = #20", which has been a problem.

In view whereof, the present invention has been achieved in view of the above-described problems, and an objective thereof is to provide a mobile communication method and a mobile switching center by which an X2 handover can be performed irrespective of whether or not the term during which the mobile station UE is able to access a CSG cell has expired.
QUALCOMM EUROPE, "Access control for in-bound mobility to HeNBs", 3GPP DRAFT, S2-090129, 3RD GENERATION PARTNERSHIP PROJECT (3GPP), MOBILE COMPETENCE CENTRE, 650, ROUTE DES LUCIOLES, F-06921 SOPHIA-ANTIPOLIS CEDEX, FRANCE, no. Phoenix, 20090107, 7 January 2009 relates to access control for in-bound mobility to HeNBs. Here, an example call flow of an X2 in-bound handover procedure to a HeNB that is a CSG cell is shown. The Source (H)eNB has stored the UE's Allowed CSG list as part of the UE context from the MME. Before the source (H)eNB performs a handover to target CSG cell, it checks if the CSG ID of the target cell on the HeNB is in the UE's Allowed CSG list. The source eNB includes the *Handover Restriction List* IE procedures in the Handover Request message sent to the target HeNB as part of the X2 handover.

### MEANS FOR SOLVING THE PROBLEM

In view of the above, the present invention proposes a radio base station as defined by claim 1.

### EFFECTS OF THE INVENTION

As has been described above, according to the present invention, it is possible to provide a mobile communication method and a mobile switching center by which an X2 handover can be performed irrespective of whether or not the term during which the mobile station UE is able to access a CSG cell has expired.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a mobile switching center MME according to the first embodiment of the present invention.
[Fig. 3] Fig. 3 is a diagram illustrating an example of information elements of "Path Switch Request" transmitted in the mobile communication system according to the first embodiment of the present invention.
[Fig. 4] Fig. 4 is a diagram illustrating an example of information elements of "Path Switch Request Acknowledge" transmitted in the mobile communication system according to the first embodiment of the present invention.
[Fig. 5] Fig. 5 is a functional block diagram of a radio base station HeNB according to the first embodiment of the present invention.
[Fig. 6] Fig. 6 is a diagram illustrating an example of information elements of "Handover Request" transmitted in the mobile communication system according to the first embodiment of the present invention.
[Fig. 7] Fig. 7 is a sequence diagram illustrating the operation of the mobile communication system according to the first embodiment of the present invention.
[Fig. 8] Fig. 8 is a flowchart illustrating the operation of the mobile switching center MME according to the first embodiment of the present invention.
[Fig. 9] Fig. 9 is a diagram for describing the problems of a conventional mobile communication system.

### BEST MODES FOR CARRYING OUT THE INVENTION

### (Configuration of mobile communication system according to first embodiment of the present invention)

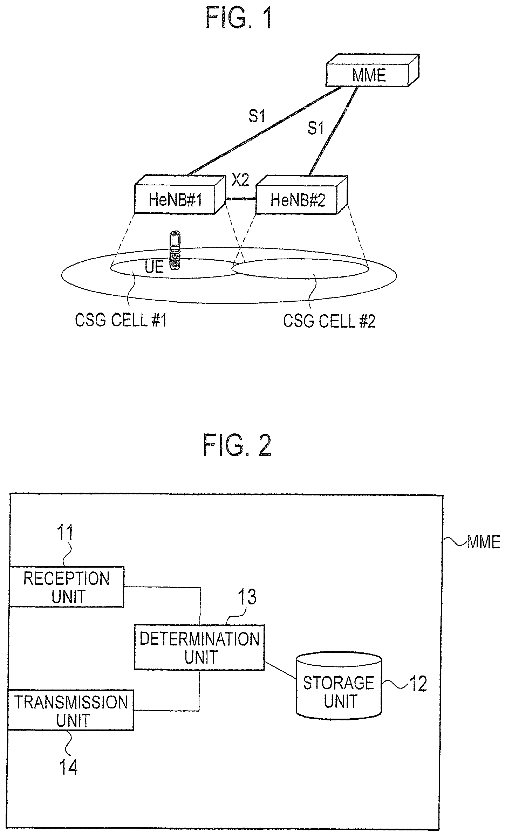

A description will now be provided for the configuration of a mobile communication system according to a first embodiment of the present invention, with reference to Fig. 1 to Fig. 6.

The mobile communication system according to the present embodiment is a mobile communication system of the LTE scheme, and, as illustrated in Fig. 1, is provided with a mobile switching center MME, radio base stations HeNB (Home-eNB)#1/HeNB#2, and a mobile station UE.

In the mobile communication system according to the present embodiment, a CSG cell #1 is provided under the control of the radio base station HeNB#1, and a CSG cell #2 is provided under the control of the radio base station HeNB#2.

The "CSG ID" of the CSG cell #1 and the "CSG ID" of the CSG cell #2 may be different or may be identical.

The radio base station HeNB#1 and the radio base station HeNB#2 are connected by an X2 interface, the radio base station HeNB#1 and the mobile switching center MME are connected by an S1 interface, and the radio base station HeNB#2 and the mobile switching center MME are connected by an S1 interface.

As illustrated in Fig. 2, the mobile switching center MME is provided with a reception unit 11, a storage unit 12, a determination unit 13, and a transmission unit 14.

The reception unit 11 is configured to receive, in the handover procedure of the mobile station UE, "Path Switch Request", and other signals from the radio base station HeNB managing a handover destination cell.

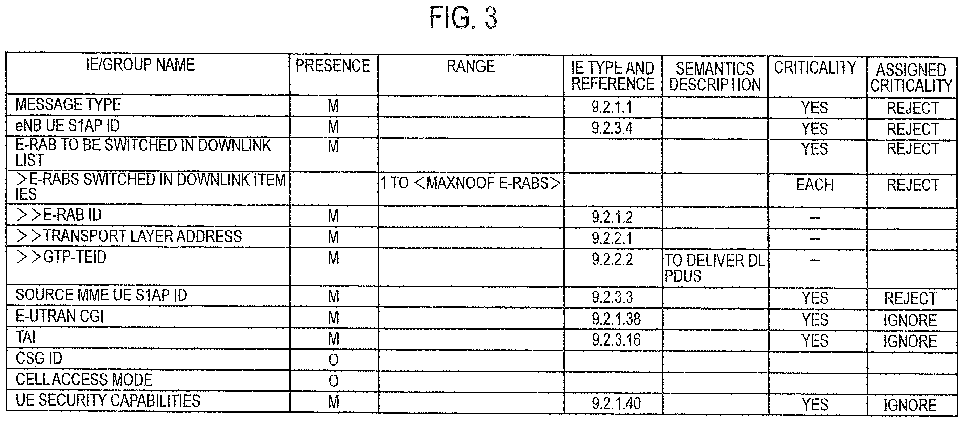

Fig. 3 illustrates an example of information elements of the "Path Switch Request" transmitted by the radio base station HeNB managing such a handover destination cell.

As illustrated in Fig. 3, the "CSG ID", "Cell Access Mode", and the like of the handover destination cell can be set in the "Path Switch Request" as information elements.

Herein, the "Cell Access Mode" is an information element representing the access mode in which the handover destination cell is operating, and, specifically, is 1-bit information representing whether or not the access mode in which the handover destination cell is operating is "hybrid mode".

In a case where the access mode in which the handover destination cell is operating is "open mode", then the "CSG ID" and the "Cell Access Mode" of the handover destination cell are not set in the "Path Switch Request".

The storage unit 12 is configured to store "UE subscription info" involving each of the mobile stations UE.

Such "UE subscription info" contains "Allowed CSG ID" representing the "CSG ID" of a cell that the mobile station UE is able to access. The term of validity may also be set in the "Allowed CSG ID".

The determination unit 13 is configured to perform, in the handover procedure of the mobile station UE, access control for a mobile station UE to the handover cell on the basis of the "CSG ID" to which the handover destination cell contained in the "Path Switch Request" received by the reception unit 11 belongs and on the basis of the access mode in which the handover cell is operating.

The transmission unit 14 is configured to transmit, in the handover procedure of the mobile station UE, "Patch Switch Request Acknowledge" or "Path Switch Request Failure" to the radio base station HeNB managing the handover destination cell in accordance with the determination results from the determination unit 13.

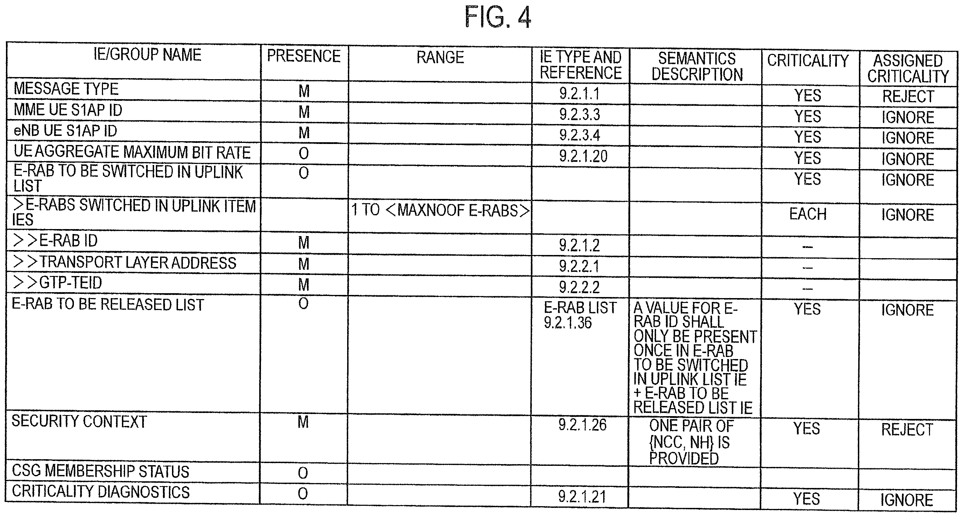

Fig. 4 illustrates an example of information elements of the "Path Switch Acknowledge" transmitted by the transmission unit 14.

As illustrated in Fig. 4, "CSG membership status" or the like can be set in the "Path Switch Request Acknowledge" as an information element.

Herein, the "CSG membership status" is information representing whether or not the mobile station UE is a registered mobile station in the handover destination cell.

For example, in a case where the mobile station UE is a registered mobile station in the handover destination cell, "member" is set as the "CSG membership status", and in a case where the mobile station UE is an unregistered mobile station in the handover destination cell, then "non member" is set as the "CSG membership status".

In a case where the access mode in which the handover destination cell is operating is the "open mode" or "closed mode", then the "CSG membership status" is not set in the "Path Switch Request Acknowledge".

Specifically, in a case where the determination unit 13 has determined that the mobile station UE is able to access the handover destination cell on the basis of the "CSG ID" contained in the "Path Switch Request", and in a case where the determination unit 13 has determined the access mode in which the handover destination cell is operating is the "hybrid mode", then the transmission unit 14 is configured to transmit, to the radio base station HeNB managing the handover destination cell, "Path Switch Request Acknowledge" containing "CSG membership status = member".

In a case where the determination unit 13 has determined that the mobile station UE is able to access the handover destination cell on the basis of the "CSG ID" contained in the "Path Switch Request", and in a case where the determination unit 13 has determined the access mode in which the handover destination cell is operating is the "closed mode", then the configuration is such that "Path Switch Request Acknowledge" is transmitted to the radio base station HeNB managing the handover destination cell.

The "CSG membership status" is not set in such "Path Switch Request Acknowledge".

Further, in a case where the determination unit 13 has determined that the mobile station UE is not able to access the handover destination cell on the basis of the "CSG ID" contained in the "Path Switch Request", and in a case where the determination unit 13 has determined the access mode in which the handover destination cell is operating is the "hybrid mode", then the configuration is such that "Path Switch Request Acknowledge" containing "CSG membership status = non member" is transmitted to the radio base station HeNB managing the handover destination cell.

In a case where the determination unit 13 has determined that the mobile station UE is not able to access the handover destination cell on the basis of the "CSG ID" contained in the "Path Switch Request", and in a case where the determination unit 13 has determined the access mode in which the handover destination cell is operating is the "closed mode", then the configuration is such that "Path Switch Request Failure" is transmitted to the radio base station HeNB managing the handover destination cell.

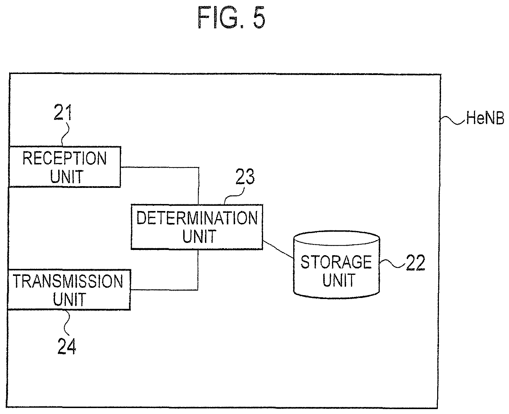

As illustrated in Fig. 5, the radio base station HeNB is provided with a reception unit 21, a storage unit 22, a determination unit 23, and a transmission unit 24.

The reception unit 21 is configured to receive "Measurement Report", and other signals from the mobile station UE.

In a case where, in the handover procedure of the mobile station UE, the radio base station HeNB is the radio base station managing the handover destination cell, then the reception unit 21 is configured to receive "Synchronization", "RRC Connection Reconfiguration Complete", and other signals from the mobile station UE.

In the handover procedure of the mobile station UE, in the case where the radio base station HeNB is the radio base station managing the handover destination cell, then the reception unit 21 is configured to receive "Patch Switch Request Acknowledge", "Path Switch Request Failure", and other signals from the mobile switching center MME, and to receive "Handover Request", "SN Status Transfer", and other signals from the radio base station managing the handover source cell.

In a case where, in the handover procedure of the mobile station UE, the radio base station HeNB is the radio base station managing the handover source cell, then the reception unit 21 is configured to receive "Handover Request Ack", "UE Context Release", and other signals from the radio base station managing the handover destination cell.

The storage unit 22 is configured to store the "CSG ID" of the subordinate cell and the access mode in which the subordinate cell is operating.

The storage unit 22 is configured to use NRT (Neighbor Relation Table) to store the "CSG ID" of the cell being managed by the adjacent radio base station as well as the access mode in which the cell being managed by the adjacent radio base station is operating.

In the handover procedure of the mobile station UE, the determination unit 23 may also be configured to determine whether or not the "CSG ID" of the handover destination cell and the "CSG ID" of the handover source cell are consistent, by comparing "CSG ID" contained in "Measurement Report" received from the mobile station UE and "CSG ID" of the subordinate cell being managed by storage unit 22.

Herein, the configuration may be such that in a case where the determination unit 23 has determined that the two are consistent, a decision is made to perform an X2 handover, and in a case where the determination unit 23 has determined that the two are not consistent, then a decision is made to perform an S1 handover.

In the handover procedure of the mobile station UE, the determination unit 23 may also be configured to determine whether or not the "CSG ID" contained in the "Measurement Report" received from the mobile station UE is correct, by comparing the "CSG ID" contained in the "Measurement Report" received from the mobile station UE and the "CSG ID" of the cell contained in the NRT being managed by the storage unit 22.

In the handover procedure of the mobile station UE, the determination unit 23 may also be configured to designate the access mode in which the handover destination cell is operating on the basis of "PCI (Physical Cell ID)" contained in the "Measurement Report" received from the mobile station UE and to perform the above-described determination(s) only in a case where the access mode is the "hybrid mode" or the "closed mode".

The transmission unit 24 is configured to transmit "Measurement Control" and other signals to the mobile station UE.

In a case where, in the handover procedure of the mobile station UE, the radio base station HeNB is the radio base station managing the handover destination cell, the transmission unit 24 is configured to transmit "RRC Connection Reconfiguration" containing "mobilityControlinformation" and other signals to the mobile station UE.

In a case where, in the handover procedure of the mobile station UE, the radio base station HeNB is the radio base station managing the handover source cell, the transmission unit 24 is configured to transmit "Handover Request", "SN Status Transfer", and other signals to radio base station managing the handover destination cell.

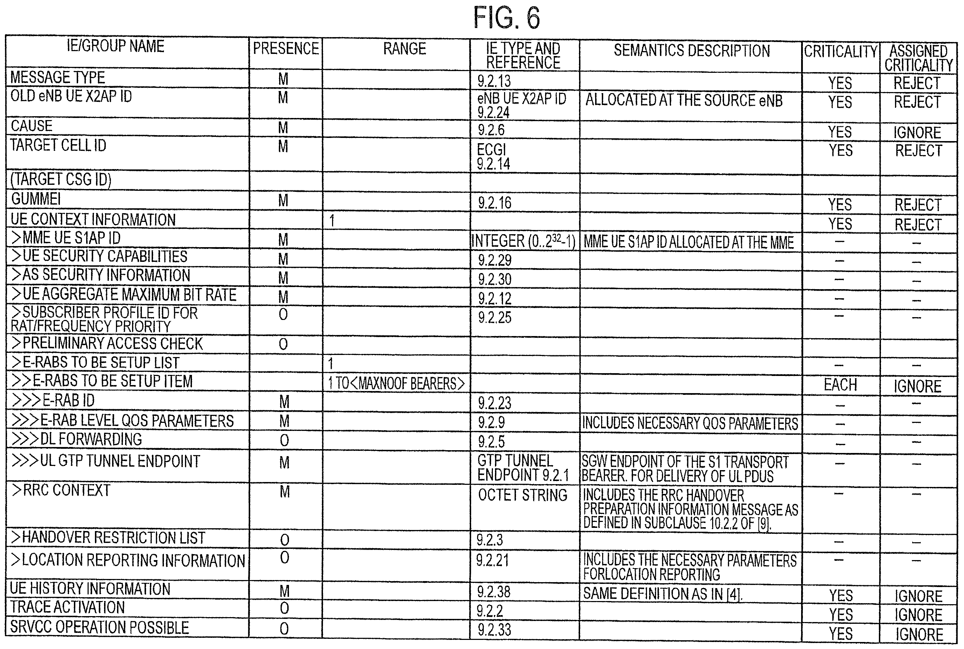

Fig. 6 illustrates an example of information elements of the "Handover Request" transmitted by the transmission unit 24.

As illustrated in Fig. 6, "Target CSG ID", "Preliminary access check", and the like can be set in the "Handover Request" as information elements.

Herein, the "Target CSG ID" represents the "CSG ID" of the handover destination cell, and the "Preliminary access check" is information representing the whether or not the mobile station UE is able to access the handover destination cell. The value of the "Preliminary access check" as notified from the mobile station UE is set in the "Preliminary access check".

The transmission unit 24 may also be configured to set the "Target CSG ID" in the "Handover Request" only in a case where the mobile station UE is able to access the handover destination cell.

The transmission unit 24 may also be configured to set the "Preliminary access check" in the "Handover Request" only in a case where the access mode in which the handover destination cell is operating is the "hybrid mode".

Also, in a case where the determination unit 23 has determined that the "CSG ID" contained in the "Measurement Report" received from the mobile station UE is correct, the transmission unit 24 may also be configured not to set the "Target CSG ID" in the "Handover Request".

Furthermore, in a case where, in the handover procedure of the mobile station UE, the radio base station HeNB is the radio base station managing the handover destination cell, then the transmission unit 24 is configured to transmit the "Handover Request Ack", the "UE Context Release", and other signals to the radio base station managing the handover source cell.

### (Operation of the mobile communication system according to the first embodiment of the present invention)

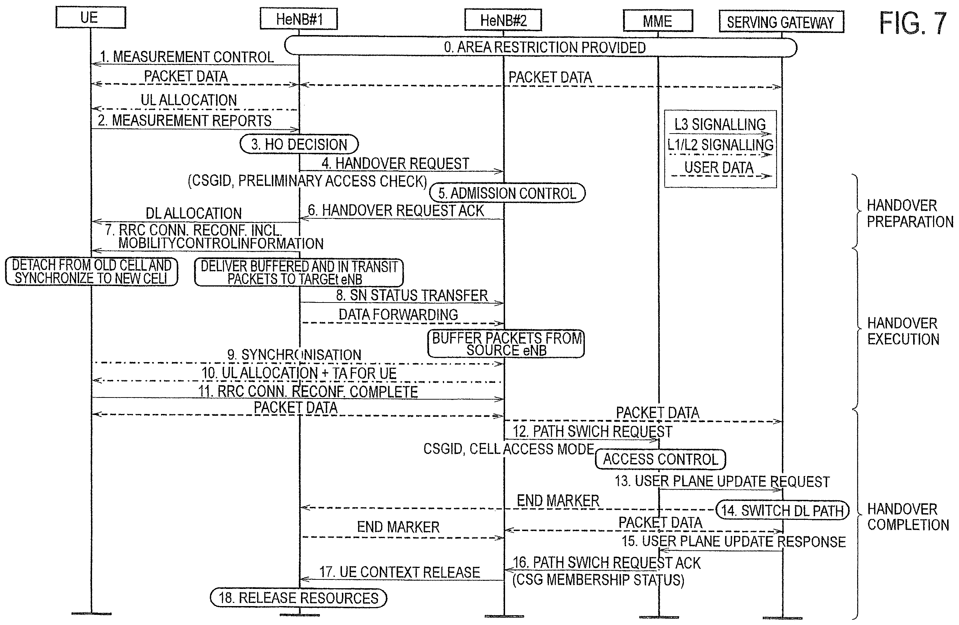

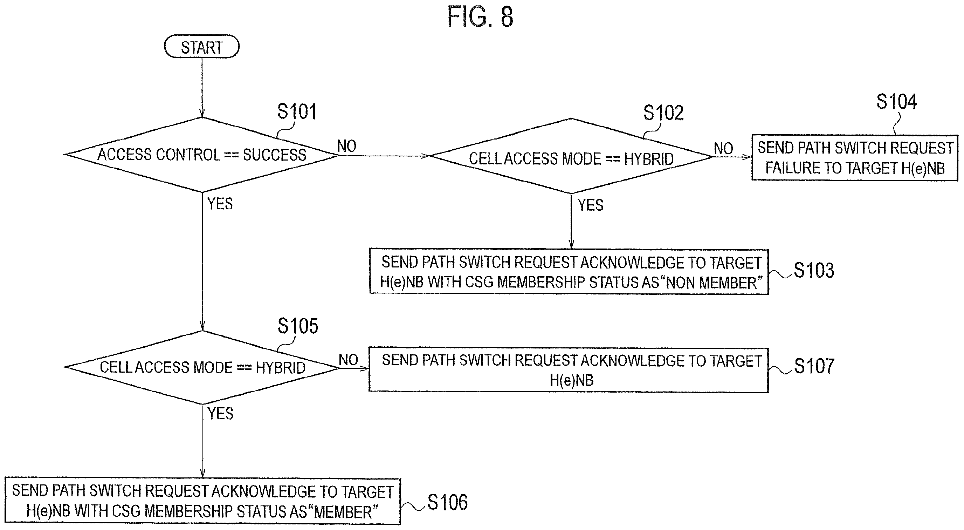

With reference to Fig. 7 and Fig. 8, the operation of the mobile communication system according to the first embodiment of the present invention will be described.

As illustrated in Fig. 7, in step S0, the CSG cell #1 subordinate to the radio base station HeNB#1 stores access control information relating to the roaming of the mobile station UE.

In step S1, the radio base station HeNB#1 transmits "Measurement Control" to the mobile station UE that is in communication under the control of the CSG cell #1.

In step S2, the mobile station UE uses a radio resource assigned by the radio base station HeNB#1 to transmit the "Measurement Report" at a predetermined timing.

In step S3, the radio base station HeNB#1 decides to begin a handover procedure of the mobile station UE from the CSG cell #1 to the CSG cell #2 subordinate to the radio base station HeNB#2.

Herein, the radio base station HeNB#1 may perform the above-described determination(s) by the determination unit 23. In the example of Fig. 7, the "CSG ID" of the CSG cell #1 and the "CSG ID" of the CSG cell #2 are identical, and are both made to be "#20".

In step S4, the radio base station HeNB#1 transmits, to the radio base station HeNB#2, the "Handover Request" containing the "Preliminary access check" as well as the "Target CSG ID" in which the "CSG ID = #20" of the CSG cell #2 has been set.

The radio base station HeNB#2, in step S5, performs access control for the "Handover Request", and, in step S6, transmits "Handover Request Ack" to the radio base station HeNB#1.

In step S7, the radio base station HeNB#1 transmits, to the mobile station UE, "RRC Connection Reconfiguration" containing the "mobilityControlinformation".

After the completion of a process of switching the connection destination cells of the mobile station UE from the CSG cell #1 to the CSG cell #2, in step S8, the radio base station HeNB#1 transmits "SN Status Transfer" to the radio base station HeNB#2.

Untransmitted packets to the mobile station UE having been accumulated in the radio base station HeNB#1 are transferred to the radio base station HeNB#2 and buffered, after which, in step S9, the mobile station UE performs a radio link synchronization process with the radio base station HeNB#2 and transmits a Random Access Preamble.

In step S10, the radio base station HeNB#2 transmits "TA (Timing Adjustment)" to the mobile station UE, and, in step S11, the mobile station UE transmits "RRC Connection Reconfiguration Complete" to the radio base station HeNB#2.

In step S12, the radio base station HeNB#2 transmits, to the mobile switching center MME, "Path Switch Request" containing the "CSG ID" and "Cell access mode" involving the CSG cell #2.

The mobile switching center MME performs access control for the mobile station UE to the CSG cell #2 in accordance with the received "Path Switch Request". A description of such access control shall now be provided, with reference to Fig. 8.

In step S13, in a case where the above-described access control is successful, the mobile switching center MME transmits "User Plane update request" to a gateway device S-GW (Serving Gateway).

The gateway device S-GW, in step S14, performs a downlink switch process with respect to the mobile station UE, and, in step S15, transmits "User Plane update response" to the mobile switching center MME.

In step S16, the mobile switching center MME transmits, to the radio base station HeNB#2, "Path Switch Request Acknowledge" containing "CSG membership status".

In step S17, the radio base station HeNB#2 transmits, to the radio base station HeNB#1, "UE Context Release", and, in step S18, the radio base station HeNB#1 deletes the UE context information involving the mobile station UE.

The following is a description of the operation of the access control and step S15 in the mobile switching center MME, with reference to Fig. 8.

As illustrated in Fig. 8, in step S101, the mobile switching center MME determines whether or not the mobile station UE is able to access the CSG cell #2 (handover destination cell) of the "CSG ID = #20" on the basis of the "CSG ID #20" and the "Allowed CSG ID" of the mobile station UE contained in the received "Path Switch Request".

In a case where the determination is that access is possible, the present operation proceeds to step S105, and in a case where the determination is that access is not possible, the present operation proceeds to step S102.

In step S102, the mobile switching center MME determines whether or not the access mode in which the CSG cell #2 is operating is the "hybrid mode" on the basis of the "CSG ID" and the "Cell access mode" contained in the received "Path Switch Request".

In the case where the determination is that the mode is the "hybrid mode", the present operation proceeds to step S103, and in the case where the determination is that the mode is not the "hybrid mode", the present operation proceeds to step S104.

In step S103, the mobile switching center MME transmits, to the radio base station HeNB#2, "Path Switch Request Acknowledge" containing "CSG membership status = non member".

In step S104, the mobile switching center MME transmits, to the radio base station HeNB#2, "Path Switch Request Failure" indicating that a handover procedure of the mobile station UE to the CSG cell #2 has failed.

In step S105, the mobile switching center MME determines whether or not the "Cell access mode" contained in the received "Path Switch Request" indicates that the mode is the "hybrid mode".

In a case where the determination is that the indicated mode is the "hybrid mode", the present operation proceeds to step S106, and in a case where the determination is that the indicated mode is not the "hybrid mode" (i.e., is the "closed mode"), the present operation proceeds to step S107.

In step S106, the mobile switching center MME transmits, to the radio base station HeNB#2, "Path Switch Request Acknowledge" containing "CSG membership status = member".

In step S107, the mobile switching center MME transmits, to the radio base station HeNB#2, "Path Switch Request Acknowledge" which does not contain "CSG membership status = member".

### (Operation and Effect of the mobile communication system according to the first embodiment of the present invention)

According to the mobile communication system based on the first embodiment of the present invention, the radio base station HeNB managing the handover destination cell is configured to use the "Path Switch Request" to notify the mobile switching center MME of the "CSG ID" of the handover destination cell and the access mode in which the handover destination cell is operating; therefore, the mobile switching center MME can perform access control for the mobile station UE to the handover destination cell even in an X2 handover procedure.

Consequently, an X2 handover can be performed irrespective of whether or not the term during which the mobile station UE is able to access the handover destination cell #2 has expired.

The characteristics of the present embodiment as described above may also be expressed as follows.

A first characteristic of the present embodiment is summarized as a mobile communication method for performing a handover procedure of a mobile station UE from a CSG cell #1 (a first cell) subordinate to a radio base station HeNB#1 (a first radio base station) to a CSG cell #2 (a second cell) subordinate to a radio base station HeNB#2 (a second radio base station), comprising: a step A of, after a connection destination cell of a mobile station UE has been switched from the CSG cell #1 to the CSG cell #2, the radio base station HeNB#2 using "Path Switch Request" (a path switch request signal for requesting a downlink path switch") to notify a mobile switching center MME of "CSG ID (subscriber group ID) = #20" to which the CSG cell #2 belongs and an access mode (either a hybrid mode or a closed mode) in which the CSG cell #2 is operating; and a step B of the mobile switching center MME performing access control for the mobile station UE to the CSG cell #2 on the basis of the "CSG ID = #20" and the access mode in which the CSG cell #2 is operating as notified.

In the first characteristic of the present embodiment, in the step B, in a case where the mobile switching center MME determines that the mobile station UE is able to access the CSG cell #2 on the basis of the "CSG ID = #20" as notified and in a case where the mobile switching center MME determines that the access mode as notified is the "hybrid mode", then "Path Switch Request Acknowledge (path switch success signal)" containing "CSG membership status = member (information indicating that the mobile station UE is a registered mobile station in the CSG cell #2)" may also be transmitted to the radio base station HeNB#2.

In the first characteristic of the present embodiment, in the step B, in a case where the mobile switching center MME determines that the mobile station UE is able to access the CSG cell #2 on the basis of the "CSG ID = #20" as notified and in a case where the mobile switching center MME determines that the access mode as notified is the "closed mode", then "Path Switch Request Acknowledge" may also be transmitted to the radio base station HeNB#2.

In the first characteristic of the present embodiment, in the step B, in a case where the mobile switching center MME determines that the mobile station UE is not able to access the CSG cell #2 on the basis of the "CSG ID = #20" as notified and in a case where the mobile switching center MME determines that the access mode as notified is the "hybrid mode", then "Path Switch Request Acknowledge" containing "CSG membership status = non member (information indicating that the mobile station UE is an unregistered mobile station in the CSG cell #2)" may also be transmitted to the radio base station HeNB#2.

In the first characteristic of the present embodiment, in the step B, in a case where the mobile switching center MME has determined that the mobile station UE is not able to access the CSG cell #2 on the basis of the "CSG ID = #20" as notified, and in a case where mobile switching center MME has determined that the access mode as notified is the "closed mode", then "Path Switch Request Failure (path switch failure signal)" may be transmitted to the radio base station HeNB#2.

A second characteristic of the present embodiment is summarized as a mobile switching center MME provided with: a reception unit 11 configured to receive "Path Switch Request" from a radio base station HeNB#2 in a handover procedure of a mobile station UE from a CSG cell #1 subordinate to a radio base station HeNB#1 to a CSG cell #2 subordinate to the radio base station HeNB#2; and a determination unit 13 configured to perform, in the handover procedure, access control for the mobile station UE to the CSG cell #2 on the basis of "CSG ID = #20" to which the CSG cell #2 belongs and an access mode in which the CSG cell #2 is operating as contained in the "Path Switch Request".

In the second characteristic of the present embodiment, there may also be provided a transmission unit 14 configured to transmit, to the radio base station HeNB#2, "Path Switch Request Acknowledge" containing the "CSG membership status = member" in a case where the determination unit 13 has determined, on the basis of the "CSG ID = #20", that the mobile station UE is able to access the CSG cell #2, and in a case where the determination unit 13 has determined that the access mode in which the CSG cell #2 is operating is the "hybrid mode".

In the second characteristic of the present embodiment, there may also be provided a transmission unit 14 configured to transmit, to the radio base station HeNB#2, "Path Switch Request Acknowledge" in a case where the determination unit 13 has determined, on the basis of the "CSG ID = #20", that the mobile station UE is able to access the CSG cell #2, and in a case where the determination unit 13 has determined that the access mode in which the CSG cell #2 is operating is the "closed mode".

In the second characteristic of the present embodiment, there may also be provided a transmission unit 14 configured to transmit, to the radio base station HeNB#2, "Path Switch Request Acknowledge" containing the "CSG membership status = non member" in a case where the determination unit 13 has determined, on the basis of the "CSG ID = #20", that the mobile station UE is not able to access the CSG cell #2, and in a case where the determination unit 13 has determined that the access mode in which the CSG cell #2 is operating is the "hybrid mode".

In the second characteristic of the present embodiment, there may also be provided a transmission unit 14 configured to transmit, to the radio base station HeNB#2, "Path Switch Request Failure" in a case where the determination unit 13 has determined, on the basis of the "CSG ID = #20", that the mobile station UE is not able to access the CSG cell #2, and in a case where the determination unit 13 has determined that the access mode in which the CSG cell #2 is operating is the "closed mode".

It is noted that the operation of the above-described the mobile switching center MME, the radio base station HeNB or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile switching center MME, the radio base station HeNB or the mobile station UE. Further, such a storage medium or a processor may be arranged, as a discrete component, in the mobile switching center MME, the radio base station HeNB or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a mobile communication method and a mobile switching center by which an X2 handover can be performed irrespective of whether or not the term during which the mobile station UE is able to access a CSG cell has expired.

### Explanation of reference numerals

MME ··· mobile switching center
HeNB ··· radio base station
11, 21 ··· reception unit
12, 22 ··· storage unit
13, 23 ··· determination unit
14, 24 ··· transmission unit

Further embodiments are as follows:
E1. A mobile communication method for performing a handover procedure of a mobile station from a first cell subordinate to a first radio base station to a second cell subordinate to a second radio base station, comprising:
   a step A of, after a connection destination cell of the mobile station has been switched from the first cell to the second cell, the second radio base station using a path switch request signal for requesting a downlink path switch to notify a mobile switching center of a subscriber group class ID to which the second cell belongs and of an access mode in which the second cell is operating; and
   a step B of the mobile switching center performing access control for the mobile station to the second cell on the basis of the subscriber group ID and the access mode as notified.
E2. The mobile communication method according to embodiment E1, wherein
   in the step B, in a case where the mobile switching center determines that the mobile station is able to access the second cell on the basis of the subscriber group ID as notified and in a case where the mobile switching center determines that the access mode as notified is a hybrid mode in which it is possible to differentiate each of a registered mobile station and an unregistered mobile station in the second cell and provide mobile communication services thereto, then a path switch success signal containing information indicating that the mobile station is a registered mobile station in the second cell is transmitted to the second radio base station.
E3. The mobile communication method according to embodiment E1, wherein
   in the step B, in a case where the mobile switching center determines that the mobile station is able to access the second cell on the basis of the subscriber group ID as notified and in a case where the mobile switching center determines that the access mode as notified is a closed mode in which it is possible to provide mobile communication services only to a registered mobile station in t h e second cell, then a path switch success signal is transmitted to the second radio base station.
E4. The mobile communication method according to embodiment E1, wherein
   in the step B, in a case where the mobile switching center determines that the mobile station is not able to access the second cell on the basis of the subscriber group ID as notified and in a case where the mobile switching center determines that the access mode as notified is a hybrid mode in which it is possible to differentiate each of a registered mobile station and an unregistered mobile station in the second cell and provide mobile communication services thereto, then a path switch success signal containing information indicating that the mobile station is an unregistered mobile station in the second cell is transmitted to the second radio base station.
E5. The mobile communication method according to embodiment E1, wherein
   in the step B, in a case where the mobile switching center determines that the mobile station is not able to access the second cell on the basis of the subscriber group ID as notified and in a case where the mobile switching center determines that the access mode as notified is a closed mode in which it is possible to provide mobile communication services only to a registered mobile station in the second cell, then a path switch failure signal is transmitted to the second radio base station.
E6. A mobile switching center, comprising:
   a reception unit configured to receive, from a second radio base station, a path switch request signal for requesting a downlink path switch in a handover procedure of a mobile station from a first cell subordinate to a first radio base station to a second cell subordinate to the second radio base station; and
   a determination unit configured to perform, in the handover procedure, access control for the mobile station to the second cell on the basis of a subscriber group ID to which the second cell belongs and an access mode in which the second cell is operating, which are contained in the path switch request signal.
E7. The mobile switching center according to embodiment E6, comprising:
   a transmission unit configured to transmit, to the second radio base station, a path switch success signal containing information indicating that the mobile station is a registered mobile station in the second cell in a case where the determination unit has determined, on the basis of the subscriber group ID, that the mobile station is able to access the second cell, and in a case where the determination unit determines that the access mode is a hybrid mode in which it is possible to differentiate each of a registered mobile station and an unregistered mobile station in the second cell and provide mobile communication services thereto.
E8. The mobile switching center according to embodiment E6, comprising:
   a transmission unit configured to transmit, to the second radio base station, a path switch success signal in. a case where the determination unit has determined, on the basis of the subscriber group ID, that the mobile station is able to access the second cell, and in a case where the mobile switching center determines that the access mode is a closed mode in which it is possible to provide mobile communication services only to a registered mobile station in the second cell.
E9. The mobile switching center according to embodiment E6, comprising:
   a transmission unit configured to transmit, to the second radio base station, a path switch success signal containing information indicating that the mobile station is an unregistered mobile station in the second cell in a case where the determination unit has determined, on the basis of the subscriber group ID, that the mobile station, is not able to access the second cell, and in a case where the determination unit determines that the access mode is a hybrid mode in which it is possible to differentiate each of a registered mobile station and an unregistered mobile station in the second cell and provide mobile communication services thereto.
E10. The mobile switching center according to embodiment E6, comprising:
   a transmission unit configured to transmit, to the second radio base station, a path switch failure signal in a case where the determination unit has determined, on the basis of the subscriber group ID, that the mobile station is not able to access the second cell, and in a case where the determination unit determines that the access mode is a closed mode in which it is possible to provide mobile communication services only to a registered mobile station in the second cell.

## Claims

1. A radio base station used in a mobile communication method for performing a handover procedure of a mobile station from a first cell, subordinate to the radio base station, to a second cell, subordinate to an adjacent radio base station,
wherein the radio base station comprises a storage unit (22) configured to store a subscriber group ID of the first cell; wherein the radio base station is configured to transmit a Measurement Control to the mobile station and to receive a Measurement Report from the mobile station;
wherein the Measurement Report comprises a subscriber group ID of the second cell; the radio base station **characterised in that** it comprises a determination unit configured to decide to perform an X2 handover when it is determined that the subscriber group ID of the first cell and the subscriber group ID of the second cell are consistent, and to decide to perform an S1 handover when it is determined that the subscriber group ID of the first cell and the subscriber group ID of the second cell are not consistent.

## Patentansprüche

1. Funkbasisstation, verwendet in einem Mobilkommunikationsverfahren zum Ausführen eines Übergabeverfahrens einer Mobilstation von einer ersten Zelle, die der Funkbasisstation nachgeordnet ist, zu einer zweiten Zelle, die einer benachbarten Funkbasisstation nachgeordnet ist,
wobei die Funkbasisstation eine Speichereinheit (22) umfasst, die zum Speichern einer Teilnehmergruppen-ID der ersten Zelle konfiguriert ist, wobei die Funkbasisstation konfiguriert ist, eine Messsteuerung an die Mobilstation zu übertragen und einen Messbericht von der Mobilstation zu empfangen;
wobei der Messbericht eine Teilnehmergruppen-ID der zweiten Zelle umfasst;
wobei die Funkbasisstation **dadurch gekennzeichnet ist, dass** sie eine Bestimmungseinheit umfasst, die konfiguriert ist, zu entscheiden eine X2-Übergabe auszuführen, wenn bestimmt wird, dass die Teilnehmergruppen-ID der ersten Zelle und die Teilnehmergruppen-ID der zweiten Zelle übereinstimmen, und zu entscheiden, eine S1-Übergabe auszuführen, wenn bestimmt wird, dass die Teilnehmergruppen-ID der ersten Zelle und die Teilnehmergruppen-ID der zweiten Zelle nicht übereinstimmen.

## Revendications

1. Station de base radio utilisée dans un procédé de communication mobile pour la mise en oeuvre d'une procédure de transfert intercellulaire d'une station mobile à partir d'une première cellule, subordonnée à la station de base radio, jusqu'à une seconde cellule, subordonnée à une station de base radio adjacente, dans laquelle la station de base radio comprend une unité de stockage (22) configurée pour stocker une identification ID de groupe d'abonnés de la première cellule ; dans laquelle la station de base radio est configurée pour transmettre une Commande de Mesure à la station mobile et pour recevoir un Rapport de Mesure de la part de la station mobile ; dans laquelle le Rapport de Mesure comprend une identification ID de groupe d'abonnés de la seconde cellule ; la station de base radio étant **caractérisée en ce qu'**elle comprend une unité de détermination configurée pour décider de mettre en oeuvre un transfert intercellulaire X2 lorsqu'il est déterminé que l'identification ID de groupe d'abonnés de la première cellule et l'identification ID de groupe d'abonnés de la seconde cellule sont cohérentes, et pour décider de mettre en oeuvre un transfert intercellulaire S1 lorsqu'il est déterminé que l'identification ID de groupe d'abonnés de la première cellule et l'identification ID de groupe d'abonnés de la seconde cellule ne sont pas cohérentes.
